## Europäisches Patentamt

(19) **European Patent Office**

**Office européen des brevets**

(11) Veröffentlichungsnummer: **0 055 335**
**B1**

(12) **EUROPÄISCHE PATENTSCHRIFT**

(45) Veröffentlichungstag der Patentschrift:
02.01.85

(51) Int. Cl.³: **C 08 G 69/26**

(21) Anmeldenummer: 81107968.0

(22) Anmeldetag: 06.10.81

(54) Transparentes, kochwasserbeständiges und sterilisationsfestes Polyamid.

(30) Priorität: 12.12.80 DE 3046806

(43) Veröffentlichungstag der Anmeldung:
07.07.82 Patentblatt 82/27

(45) Bekanntmachung des Hinweises auf die Patenterteilung:
02.01.85 Patentblatt 85/1

(84) Benannte Vertragsstaaten:
AT BE CH DE FR GB IT LI LU NL SE

(56) Entgegenhaltungen:
FR - A - 2 117 980
FR - A - 2 324 672
FR - A - 2 343 771
FR - A - 2 360 621

(73) Patentinhaber: DYNAMIT NOBEL
AKTIENGESELLSCHAFT, Postfach 1209,
D-5210 Troisdorf, Bez. Köln (DE)

(72) Erfinder: Bier, Gerhard, Dr., Altenrather Strasse 2,
D-5210 Troisdorf (DE)
Erfinder: Blaschke, Franz, Dr., Jägerstrasse 24,
D-5810 Witten-Annen (DE)
Erfinder: Schade, Gerhard, Dr., Akazienweg 13,
D-5810 Witten-Bommern (DE)
Erfinder: Vollkommer, Norbert, Dr., Schumannstrasse 5,
D-5210 Troisdorf-Kriegsdorf (DE)

## Beschreibung

Die Erfindung betrifft transparente, thermoplastisch verformbare Copolyamide mit hoher Glasübergangstemperatur, guter Wärmeformbeständigkeit und Beständigkeit gegen Wasser bei Siedetemperatur sowie unter Sterilisationsbedingungen.

Nachfolgend werden Polyamide als kochwasserbeständig bezeichnet, die als Formkörper in kochendem Wasser mindestens 2000 Stunden ohne Eintrübung und ohne merkliche Deformation gelagert werden können.

Als sterilisationsfest werden Polyamide dann bezeichnet, wenn Formkörper eine Lagerung in Wasser bei 122°C unter Eigendruck mindestens 24 Stunden lang ohne Eintrübung und Deformation überstehen.

Als Deformation wird hier nicht nur Verbiegen oder Verwerfen verstanden, sondern bereits eine deutliche Dimensionsänderung, beispielsweise der Länge von Normkleinstäben.

Weiterhin ist eine hohe Wasseraufnahme in kochendem Wasser oder bei der Sterilisation unerwünscht, da sich dadurch auch die Maße sowie mechanische und elektrische Eigenschaften verändern.

Die Erfindung bezieht sich auf Polyamide (PA) auf der Grundlage von Diaminodicyclohexylmethan (Dicykan) sowie gegebenenfalls Anteilen von Bisaminomethyl-tricyclodecan (TCD-Diamin) als Diaminkomponenten und von Isophthalsäure (IPS) und Decandicarbonsäure (DDS) sowie gegebenenfalls 5-tert.Butyl-Isophthalsäure (tert.Butyl-IPS) als Dicarbonsäurekomponenten.

Bekannte transparente Polyamide sind im allgemeinen nicht kochwasserbeständig. Einige wenige Rezepturen ergeben Polyamide, die im Siedewasser eine kurze Beständigkeit bei geringer Dimensionsstabilität und hoher Wasseraufnahme aufweisen. Die Sterilisationsfestigkeit ist allgemein für praktische Zwecke zu gering.

Polyamide auf Basis von Dicykan und gegebenenfalls nichtcyclischen aliphatischen Diaminen als Diaminkomponente sowie Azelainsäure und gegebenenfalls IPS und/oder Adipinsäure als Dicarbonsäuren (DE-OS 2 737 257) besitzen nach dem dortigen Beispiel 2 (s. nachstehendes Vergleichsbeispiel B) selbst bei Verzicht auf die Adipinsäure, nur eine zeitlich sehr begrenzte Kochwasserbeständigkeit und keine Sterilisationsfestigkeit sowie eine zu hohe Wasseraufnahme von >6,5% bei Immersion der Spritzlinge in kochendem Wasser.

Polyamide auf der Grundlage von ε-Caprolactam sowie Dicykan als Diamin und IPS und gegebenenfalls Azelainsäure als Dicarbonsäuren, (DE-OS 2 753 577) erfüllen ebenfalls nicht die Forderungen nach Kochwasserbeständigkeit und Sterilisationsfestigkeit und weisen eine sehr hohe Wasseraufnahme unter Kochbedingungen auf.

Ein Polyamid aus Laurinlactam, IPS und dem Dimethylderivat des Dicykans mit jeweils 33,3 Mol-% der Komponenten (DE-OS 2 642 244) hat nur eine sehr geringe Resistenz gegenüber Wasser unter Sterilisationsbedingungen und zeigt schon nach 12 Stunden von den Kanten ausgehend eine deutliche Eintrübung. Nach 24 Stunden ist der Spritzling völlig opak und leicht deformiert und nach 2 Tagen vollständig verworfen. Bei Lagerung in kochendem Wasser tritt nach 800 Stunden bereits eine Schrumpfung, z. B. eines 125 mm langen Spritzstabes auf 121 mm, auf.

Es bestand deshalb die Aufgabe, langfristig kochwasserbeständige und sterilisationsfeste Polyamide mit einer geringen Wasseraufnahme und einer hohen Maßhaltigkeit zu entwickeln.

Diese Aufgabe wird durch die erfindungsgemäßen Polyamide gelöst.

Gegenstand der Erfindung sind Polyamide, erhalten durch Polykondensation eines Gemisches aus

a) 20—65 Mol-%, bevorzugt 40—55 Mol-% Isophthalsäure
b) 35—60 Mol-%, bevorzugt 45—60 Mol-% Decandicarbonsäure
c) 0—30 Mol-%, bevorzugt 0 Mol-% tert.-Butylisophthalsäure

sowie

d) 50—100 Mol-%, bevorzugt 100 Mol-% Diaminodicyclohexylmethan
e) 0— 50 Mol-%, bevorzugt 0 Mol-% Bisaminomethyltricyclodecan

wobei stets sowohl die Summe aus den Dicarbonsäurekomponenten a) + b) + c) als auch die Summe aus den Diaminkomponenten d) + e) jeweils 100 Mol-% betragen muß.

Gegebenenfalls kann bis zur Hälfte der Molmenge der Isophthalsäure im jeweils hergestellten Polyamid durch Terephthalsäure ersetzt sein, wobei bei überhaupt vorhandener Terephthalsäure bevorzugt bis zu einem Drittel der Isophthalsäure durch Terephthalsäure ersetzt sein kann.

Die neuen Polyamide besitzen sowohl die geforderte langfristige Siedewasserbeständigkeit als auch gute Sterilisationsfestigkeit. Formkörper aus den Polyamiden erleiden bei der Prüfung auf Kochbeständigkeit und Sterilisationsfestigkeit keine oder nur so geringe Deformationen bzw. Dimensionsänderungen, daß für praktische Zwecke eine völlige Dimensionsstabilität gegeben ist.

Demgegenüber tritt bei bekannten Polyamiden, z. B. denen der Vergleichsbeispiele neben geringen Zeiten der Kochfestigkeit, besonders häufig eine Deformation, z. B. von Schulterstäben bereits unter der Wirkung der Schwerkraft oder bei geringer Belastung durch darüberliegende Spritzlinge.

Es erscheint bemerkenswert und überraschend, daß die erfindungsgemäßen Polyamide mindestens 24 Stunden, überwiegend sogar durch eine Reihe von Tagen im Dauerversuch unter Sterilisationsbedingungen beständig sind, während z. B. die Substanz nach Vergleichsversuch A bereits nach 12 Stunden zu trüben beginnt.

Bemerkenswert erscheint, daß Polyamide mit der Zusammensetzung des Vorzugsbereichs, besonders die mit 45—50 Mol-% IPS; 50—55 Mol-% DDS und 100 Mol-% Dicykan (Beispiel 1 und 2) diese guten Kochfestigkeiten und Sterilisationsbeständigkeiten aufweisen.

Soweit Zusammensetzungen außerhalb des Vorzugsbereichs von 40—55 Mol-% IPS·gewählt werden, ist der Bereich mit 55—65 Mol-% IPS wertvoller und insoweit relativ bevorzugt gegenüber dem Bereich mit 20—40 Mol-% IPS.

In diesem Bereich von 55—65 Mol-% IPS ist die Mitverwendung von tert.Butylisophthalsäure nicht wünschenswert.

Im Bereich von 20—40 Mol-% IPS hingegen kann tert.Butylisophthalsäure die technischen Eigenschaften der Polyamide und die Koch- und Sterilisationsfestigkeit verbessern; Im Bereich von 20—30 Mol-% IPS ist die Mitverwendung von tert. Butylisophthalsäure wünschenswert und dann in Mengen von 10—30 Mol-% bevorzugt.

Bisaminomethyltricyclodecan kann besonders vorteilhaft dann in Mengen bis zu 50 Mol-% neben Dicykan eingesetzt werden, wenn auch die IPS in Mengen (außerhalb des Vorzugsbereichs) von 55—65 Mol-% verwendet wird.

Entschieden bevorzugt sind jedoch Polyamide aus nur den Komponenten a) b) und d).

Das Diaminodicyclohexylmethan (Dicykan) kann aus den bekannten Strukturisomeren bestehen, vorzugsweise den 4,4'-Strukturisomeren, welches jedoch auch konstituierende Anteile an 2,4'- und 2,2'-Isomere in Anteilen bis 8% enthalten kann. Gegebenenfalls kann auch ein Teil des Dicykans, beispielsweise bis zu 20%, durch solche Derivate des Dicykans ersetzt sein, in denen u. a. das Kohlenstoffatom zwischen den beiden Cyclohexanringen, ein oder zwei Methylgruppen oder ggf. Ethylgruppen trägt oder in denen Methylgruppen die Cyclohexanringe, beispielsweise in 2-Stellung zur Aminogruppe, substituieren.

Gegebenenfalls kann auch ein Teil der Decandicarbonsäure, durch vorwiegend gesättigte Dicarbonsäuren ähnlicher Kettenlänge, beispielsweise in Mengen von bis zu 15%, u. a. durch Octandicarbonsäure, Nonan- oder Heptandicarbonsäure, ersetzt sein.

Die Polyamide der Beispiel 1 bis 9 sowie Beispiel 13 und Vergleichsbeispiel B wurden mit einem Diaminodicyclohexylmethan (Dicykan) hergestellt, welches als Hauptanteil das 4,4'-Isomere enthielt, und zwar ca. 14% cis/cis-, ca. 60% cis/trans- und ca. 21% trans/trans-Anteil und ca. 5% 2,2' + 2,4'-Isomerenanteil. Die Polyamide der Beispiele 10 bis 12 wurden mit einem Dicykan mit der Isomerverteilung 5—10% cis/cis-, 35—45% cis/trans- und 45—55% trans/trans-Anteil hergestellt.

Die erfindungsgemäßen Polyamide lassen sich in an sich bekannter Weise auf dem Wege der Schmelzpolykondensation herstellen.

Dicarbonsäurekomponenten und Diaminkomponenten werden in annähernd stöchiometrischen Mengen mit je nach Kondensationsbedingungen und Flüchtigkeit leichtem Diaminüberschuß bis etwa 10 Mol-% eingesetzt.

Zur Homogenisierung des Salz- bzw. Oligomerengemisches können Wasser sowie gegebenenfalls Kondensationshilfsstoffe, besonders hierfür bekannte Säuren, zugesetzt werden.

Anstelle der Säuren können deren funktionelle Derivate, besonders statt TPS der Dimethylester, verwendet werden. Die während des Abdestillierens des Wassers entstehende Oligoamidschmelze wird unter Inertgasstrom bei steigender Temperatur kondensiert und dann im Temperaturbereich 260°—310°C, vorzugsweise 270—300°C, gegebenenfalls unter Vakuum, bis zum gewünschten Molgewicht polykondensiert.

Die transparenten, nahezu farblosen Polyamide lassen sich problemlos auf den üblichen Formgebungsmaschinen verarbeiten. Sie können Zusatzstoffe, insbesondere Füll- und Verstärkungsmaterialien oder Flammschutzmittel oder Farbstoffe oder Stabilisatoren enthalten.

In den Beispielen wurde die Lösungsviskosität $\eta_{red}$ in 1%iger Lösung (1 g in 100 ml Lösung Phenol/o-Dichlorbenzol = 60/40) ermittelt.

Glastemperatur (Tg) nach der DSC-Methode (Differential-Thermo-Calorimetrie).

Die Kochbeständigkeit wurde an 1 mm Pressplatten, 4 mm dicken Normkleinstäben und Schulterstäben in siedendem Wasser geprüft.

Die Kochbeständigkeit geht häufig über die mitgeteilte Zeit von 90 bzw. 117 Tagen hinaus, da zu diesem Zeitpunkt die Versuche, da über praktische Bedürfnisse hinausgehend, abgebrochen wurden.

Die Sterilisationsbeständigkeit wurde an Normkleinstäben (4 × 6 × 125 mm) in Wasser von 122°C unter Eigendruck geprüft.

Beispiel 1

Zur Herstellung eines Polyamids der Zusammensetzung: IPS = 50 Mol-%, DDS = 50 Mol-%, Dicykan = 100 Mol-% werden 2,49 kg (15 Mol) IPS, 3,45 kg (15 Mol) DDS und 6,49 kg (30 Mol + 3 Gew.-%

Überschuß) Dicykan zusammen mit 17,8 kg demineralisiertem Wasser in einen Metallautoklaven chargiert.

Nachdem 5mal mit Stickstoff gespült wurde, wird nach Einschalten des Rührwerks zur Vervollständigung der Salzbildung auf 90°C aufgeheizt. Nach 1 Stunde wird die Salzlösung bei Temperaturen zwischen 105 und 110°C bis zur Löslichkeitsgrenze von ca. 40% eingeengt. Bei geschlossenen Ventilen wird bis 220°C hochgeheizt, wobei sich ein Druck von 24—25 bar ausbildet, und unter diesen Bedingungen 2 Stunden lang vorkondensiert.

Nach dieser Zeit wird der unter Druck stehende Kessel in der Weise entspannt, daß die Temperatur von 220°C gehalten wird. Der Entspannungsprozeß nimmt etwa 2 bis 3 Stunden in Anspruch.

Zur Polykondensation wird die Temperatur bis 280°C gesteigert, wobei mit zunehmender Schmelzviskosität des Ansatzes die Rührerdrehzahl entsprechend gesenkt wird. Nach 4,5 Stunden ist die Polykondensation beendet.

Unter Stickstoff-Überdruck wird das Polyamid über ein Bodenventil aus dem Kessel als Strang abgezogen und granuliert.

Es wird ein transparentes farbloses Polyamid erhalten mit nachfolgenden Eigenschaften:

a)  Glastemperatur Tg = 175°C
b)  Carbonamidgehalt CONH = 0,537 Mol/100 g
c)  Lösungsviskosität $\eta_{red}$ = 1,89 dl/g.

Das Polyamid wird zu 1 mm dicken Preßplatten sowie auf einer Krauss-Maffei-Spritzgußmaschine zu Spritzlingen verarbeitet.

Kochbeständigkeit: 117 Tage (= ca. 2800 Stunden) trübungsfrei und ohne Deformation.

Die Wasseraufnahme von 1 mm Preßplatten ist nach 92 Tagen in siedendem Wasser (Sättigungswert) = 3,9%.

Die Wasseraufnahme von 1 mm Preßplatten nach 92 Tagen in Wasser bei Raumtemperatur beträgt ebenfalls 3,9%.

Sterilisationsfestigkeit:

|          | Beispiel 1                        | Polyamid A                           |
|----------|-----------------------------------|--------------------------------------|
| 12 Std.  | transparent<br>nicht deformiert   | leicht trübe<br>nicht deformiert     |
| 24 Std.  | desgl.                            | stark trübe<br>leicht deformiert     |
| 2 Tage   | desgl.                            | opak<br>stark deformiert<br>(verworfen) |
| 5 Tage   | desgl.                            | desgl.                               |
| 8 Tage   | nahezu transparent<br>nicht deformiert | desgl.                          |

Mechanische Eigenschaften und Wärmeformbeständigkeit vgl. Tabelle 1.

Vergleichsbeispiel A

Ein Polyamid, aus je 33,3 Mol-% Dimethyldicykan, IPS und Laurinlactam (nach DE-OS 2 642 244), hergestellt, zeigt unter Sterilisationsbedingungen das oben unter »Polyamid A« angeführte Verhalten.

Beispiel 2

In der gleichen Polykondensationsapparatur und nach der gleichen Verfahrensweise wie in Beispiel 1 wird ein Polyamid der Zusammensetzung: IPS = 45 Mol-%, DDS = 55 Mol-%, Dicykan = 100 Mol-% durch Chargierung von 2,24 kg (13,5 Mol) IPS, 3,79 kg (16,5 Mol) DDS und 6,49 kg (30 Mol + 3 Gew.-%Überschuß) Dicykan, zusammen mit 18 kg demineralisiertem Wasser hergestellt. Es wird ein farbloses, transparentes Polyamid erhalten mit nachfolgenden Eigenschaften:

0 055 335

Glastemperatur Tg = 166°C
Carbonamidgehalt CONH = 0,533 Mol/100 g
Lösungsviskosität $\eta_{red}$ = 1,81 dl/g.

Das Polyamid wird zu 1 mm dicken Preßplatten, sowie auf einer Krauss-Maffei zu Spritzlingen verarbeitet. Mechanische Eigenschaften und Wärmeformbeständigkeiten vgl. Tabelle 1.

Kochbeständigkeit: bisher 117 Tage trübungsfrei und ohne Deformation. Wasseraufnahme von 1 mm Preßplatten nach 92 Tagen in siedendem Wasser (Sättigungswert) : 3,3 Gew.-% Wasseraufnahme von 1 mm Preßplatten nach 92 Tagen in Wasser bei Raumtemperatur: 3,2 Gew.-%.

Sterilisationsbeständigkeit:

|  | Beispiel 2 |
| --- | --- |
| 12 Stunden | transparent nicht deformiert |
| 2 Tage | transparent nicht deformiert |
| 3 Tage | leicht trübe nicht deformiert |
| 5 Tage | trübe nicht deformiert |

Tabelle 1

|  | Beispiel 1 | Beispiel 2 |
| --- | --- | --- |
| Streckspannung, $N/mm^2$ | 87 | 83 |
| Reißfestigkeit, $N/mm^2$ | 74 | 64 |
| Reißdehnung, % | 120 | 140 |
| Zug-E-Modul, $N/mm^2$ | 2115 | 2015 |
| Kugeldruckhärte, $N/mm^2$ | 123 | 119 |
| Schlagzähigkeit[1]), 23°C, $KJ/m^2$ | 10 n. g. | 10 n. g. |
| Schlagzähigkeit, nach 4 Tagen NK 23/50, $KJ/m^2$ | 10 n. g. | 10 n. g. |
| Schlagzähigkeit, −50°C, $KJ/m^2$ | 10 n. g. | 10 n. g. |
| Kerbschlagzähigkeit[1]), 23°C, $KJ/m^2$ | 9,2 | 8,8 |
| Kerbschlagzähigkeit, nach 4 Tagen NK 23/50, $KJ/m^2$ | 13 | 14,6 |
| Kerbschlagzähigkeit, −50°C, $KJ/m^2$ | 5,6 | 6,2 |
| Wärmeformbeständigkeit nach Vicat, °C | 170 | 162 |
| Wärmeformbeständigkeit nach Martens, °C | 127 | 126 |
| Wärmebeständigkeit nach ISO/R 75; A °C | 139 | 135 |
| Wärmebeständigkeit nach ISO/R 75; B, °C | 157 | 158 |

[1]) spritzfrisch.

5

### Beispiel 3 bis 12

In der gleichen Weise wie in Beispiel 1 beschrieben, werden die in den Tabellen 3 und 4 zusammengestellten Polyamide hergestellt und auf ihre Eigenschaften hin ausgeprüft.

Die Kochbeständigkeit und Sterilisationsfestigkeit ist in den Tabelle 3 und 4 angegeben.

Die wichtigsten mechanischen und thermischen Eigenschaften sind für einige Polyamide in Tabelle 2 zusammengestellt.

### Beispiel 13

Zur Herstellung eines Polyamids der Zusammensetzung: IPS = 25 Mol-%, TPS = 25 Mol-%, DDS = 50 Mol-%, Dicykan = 100 Mol-%, werden 1,24 kg (7,5 Mol) IPS, 1,45 kg (7,5 Mol) Dimethyltherephthalat, 3,45 kg (15 Mol) DDS und 6,49 kg (30 Mol + 3% Überschuß) Dicykan zusammen mit 1 kg demineralisiertem Wasser in einen Metallautoklaven eingewogen. Nach 5maligem Spülen mit Stickstoff wird das Ansatzgemisch auf 110°C hochgeheizt, wobei die Aminolysereaktion und eine Oligoamidbildung einsetzen. Zur Vervollständigung der Aminolyse wird noch 3 Stunden bei 110°C belassen, dann 3 kg Wasser zugesetzt und aufgeheizt. Es werden ca. 1,5 l Destillat (Methanol/Wasser-Gemisch) entnommen, der Autoklav verschlossen und weiter auf 220°C hochgeheizt. Nach 2 Stunden bei 220°C wird in der Weise entspannt, daß die Temperatur von 220°C gehalten wird.

Zur Polykondensation wird die Temperatur bis 280°C gesteigert und innerhalb von 5 Stunden zu Ende kondensiert. Es wird ein transparentes, farbloses Polyamid erhalten.

Glastemperatur Tg = 176°C.
Carbonamidgruppengehalt CONH = 0,537 Mol/100 g.
Lösungsviskosität $\eta_{red}$ = 1,98 dl/g.
Kochbeständigkeit: Bisher 90 Tage (= ca. 2160 Stunden) trübungsfrei und ohne Deformation.
Sterilisationsfestigkeit: Erst nach 7 Tagen Beginn der Eintrübung; die Spritzlinge sind nicht deformiert.

Mechanische Eigenschaften:

| | |
|---|---|
| Schlagzähigkeit[1]), 23°C, KJ/m$^2$ | 10 n. g. |
| Schlagzähigkeit nach 4 Tagen NK 23/50, KJ/m$^2$ | 10 n. g. |
| Kerbschlagzähigkeit[1]), 23°C, KJ/m$^2$ | 7,6 |
| Kerbschlagzähigkeit nach 4 Tagen NK 23/50, KJ/m$^2$ | 11,8 |
| Streckspannung, N/mm$^2$ | 89 |
| Reißfestigkeit, N/mm$^2$ | 73 |
| Reißdehnung, % | 95 |
| Zug-E-Modul, N/mm$^2$ | 2200 |

Wärmeformbeständigkeit:

| | |
|---|---|
| nach ISO/R 75; A, °C | 136 |
| nach ISO/R 75; B, °C | 149 |

[1]) spritzfrisch.

### Vergleichsbeispiel B (≙ Beispiel 2 in der DE-OS 2 737 257)

Zur Herstellung eines Polyamids der Zusammensetzung: IPS = 30 Mol-%, Azelainsäure = 70 Mol-%, Dicykan = 100 Mol-% werden in einen durch ein Metallbad beheizbaren 500 ml-Glaskolben 19,92 g (0,12 Mol) IPS, 52,7 g (0,28 Mol) AZ und 86,52 g (0,4 Mol + 3% Überschuß) Dicykan zusammen mit 50 ml entsalztem Wasser eingewogen. Nach Spülen mit Stickstoff wird zur Homogenisierung und Salzbildung unter Rühren auf 110°C aufgeheizt und 0,5 Stunden bei dieser Temperatur belassen. Innerhalb von 3,5 Stunden wird auf 210°C hochgeheizt, wobei nach Erreichen von 175°C der Ansatz fest wird und der Rührer abgestellt werden muß. Nach weiterer Temperatursteigerung auf 260°C schmilzt das Polyamid wieder auf. Unter Rühren wird die Temperatur auf 280°C gesteigert und innerhalb von 4 Stunden auskondensiert.

Es wird ein nahezu farbloses transparentes Polyamid erhalten mit den nachstehenden Eigenschaften:

a)  Glastemperatur Tg = 168°C
b)  Lösungsviskosität $\eta_{red}$ =
    1,73 dl/g.

Das Polyamid wird zu einer 1 mm Platte sowie zu einer 4 mm dicken Platte verpreßt.

c) Kochbeständigkeit:
Die 1 mm Preßplatte zeigt bereits nach 14tägiger Immersion im Siedewasser beginnende Eintrübung und ist nach insgesamt 3 Wochen vollständig eingetrübt. Die Wasseraufnahme ist 6,8 Gew.-%
d) Sterilisationsbeständigkeit:
Die 4 mm Preßplatte zeigt in Wasser bei 122°C unter Druck bereits nach 12 Stunden deutliche Eintrübung und nach 24 Stunden ist die Platte vollständig opak und deformiert (verworfen).

Tabelle 2

| | Beispiel | | | | | |
|---|---|---|---|---|---|---|
| | 3 | 4 | 6 | 8 | 10 | 11 |
| Streckspannung, N/mm² | 81 | 88 | 84 | 78 | 89 | 83 |
| Reißfestigkeit, N/mm² | 61 | 76 | 69 | 63 | 71 | 67 |
| Reißdehnung, % | 130 | 80 | 110 | 65 | 90 | 110 |
| Zug-E-Modul, N/mm² | 2000 | 2300 | 2200 | 2350 | 2250 | 2200 |
| Schlagzähigkeit[1] 23°, KJ/m² | 10 n. g. | 10 n. g. | 10 n. g. | – | 10 n. g. | 10 n. g. |
| nach 4 Tagen NK 23/50, KJ/m² | 10 n. g. | 10 n. g. | 10 n. g. | 10 n. g. | 10 n. g. | 10 n. g. |
| Kerbschlagzähigkeit[1]) 23°C, KJ/m² | 9,8 | 7,2 | – | – | – | – |
| Kerbschlagzähigkeit nach 4 Tagen NK 23/50, KJ/m² | 15 | 12,8 | 14,5 | 10 | 12 | 13,5 |
| Wärmeformbeständigkeit nach Martens, °C | 119 | 131 | – | – | – | – |
| nach ISO/R 75; A, °C | 132 | 142 | 137 | 134 | 144 | 135 |
| nach ISO/R 75; B, °C | 149 | 163 | 151 | 149 | 161 | 154 |

[1]) spritzfrisch.

Tabelle 3

| | Beispiel | | | | |
|---|---|---|---|---|---|
| | 3 | 4 | 5 | 6 | 7 |
| Dicykan[1]), Mol-% | 100 | 100 | 100 | 100 | 80 |
| TCD-Diamin, Mol-% | — | — | — | — | 20 |
| IPS, Mol-% | 40 | 55 | 20 | 25 | 55 |
| DDS, Mol-% | 60 | 45 | 60 | 55 | 45 |
| tert.Butyl-IPS, Mol-% | — | — | 20 | 20 | — |
| $\eta_{red}$, [dl/g] | 1,86 | 1,78 | 1,88 | 1,92 | 1,72 |
| Tg (DSC-Meth.), [°C] | 163 | 183 | 169 | 173 | 174 |
| CONH, [Mol/100 g] | 0,528 | 0,542 | 0,513 | 0,518 | 0,547 |
| Kochbeständigkeit[2]) | t. 117 T<br>nicht deformiert | t. 117 T<br>nicht deformiert | t. 117 T<br>nicht deformiert | t. 117 T<br>nicht deformiert | t. 117 T<br>nicht deformiert |
| Sterilisationsbeständigkeit[3]) | t. n. d.<br>nach 24 Std. | t. n. d.<br>nach 48 Std. | t. n. d.<br>nach 3 Tagen | t. n. d.<br>nach 8 Tagen | t. n. d.<br>nach 3 Tagen |

[1]) eingesetztes Dicykan hatte in den Beispielen 10, 11 und 12 einen trans/trans-Isomeranteil von ca. 50%, in den anderen Beispielen von ca. 21%.
[2]) in Siedewasser (100°C); t. 117 T = nach 117 Tagen transparent und nicht deformiert.
[3]) 122°C unter Eigendruck des Wassers; t. n. d. = transparent und nicht deformiert.

Tabelle 4

| | Beispiel | | | | |
|---|---|---|---|---|---|
| | 8 | 9 | 10 | 11 | 12 |
| Dicykan[1], Mol-% | 60 | 60 | 100[1] | 100[1] | 100[1] |
| TCD-Diamin, Mol-% | 40 | 40 | — | — | — |
| IPS, Mol-% | 60 | 50 | 50 | 45 | 40 |
| DDS, Mol-% | 40 | 35 | 50 | 55 | 60 |
| tert.Butyl-IPS, Mol-% | — | 15 | — | — | — |
| $\eta_{red}$ [dl/g] | 1,64 | 1,56 | 1,58 | 1,93 | 1,87 |
| Tg (DSC-Meth.), [°C] | 170 | 178 | 183 | 174 | 172 |
| COHN, [Mol/100 g] | 0,557 | 0,549 | 0,537 | 0,535 | 0,528 |
| Kochbeständigkeit[2] | t. 117 T nicht deformiert | t. 117 T nicht deformiert | t. 117 T nicht deformiert | t. 117 T nicht deformiert | t. 117 T nicht deformiert |
| Sterilisationsbeständigkeit[3] | t. n. d. nach 2 Tagen | t. n. d. nach 3 Tagen | t. n. d. nach 10 Tagen | t. n. d. nach 8 Tagen | t. n. d. nach 5 Tagen |

[1] eingesetztes Dicykan hatte in den Beispielen 10, 11 und 12 einen trans/trans-Isomeranteil von ca. 50%, in den anderen Beispielen von ca. 21%.
[2] in Siedewasser (100°C); t. 117 T = nach 117 Tagen transparent und nicht deformiert.
[3] 122°C unter Eigendruck des Wassers; t. n. d. = transparent und nicht deformiert.

0 055 335

**Patentansprüche für die Vertragsstaaten: BE, CH, DE, FR, GB, IT, LI, W, NL, SE**

1. Polyamide, erhalten durch Polykondensation eines Gemisches aus

a)   20—65 Mol-% Isophthalsäure
b)   35—60 Mol-% Decandicarbonsäure
c)    0—30 Mol-% tert.-Butylisophthalsäure

sowie

d)   50—100 Mol-% Diaminodicyclohexylmethan
e)    0— 50 Mol-% Bisaminomethyltricyclodecan

wobei stets sowohl die Summe aus den Dicarbonsäurekomponenten a) + b) + c) als auch die Summe aus den Diaminkomponenten d) + e) jeweils 100 Mol-% betragen muß.

2. Polyamide nach Patentanspruch 1, erhalten durch Polykondensation eines Gemisches aus

a)   40—55 Mol-% Isophthalsäure
b)   45—60 Mol-% Decandicarbonsäure
d)    100 Mol-% Diaminodicyclohexylmethan.

3. Polyamide nach Patentanspruch 1 oder 2, dadurch gekennzeichnet, daß gegebenenfalls bis zur Hälfte der Molmenge der Isophthalsäure im jeweiligen Polyamid durch Terephthalsäure ersetzt sein kann.

**Patentansprüche für den Vertragsstaat: AT**

1. Verfahren zur Herstellung von Polyamiden, dadurch gekennzeichnet, daß ein Gemisch folgender Komponenten polykondensiert wird:

a)   20—65 Mol-% Isophthalsäure
b)   35—60 Mol-% Decandicarbonsäure
c)    0—30 Mol-% tert.-Butylisophthalsäure

sowie

d)   50—100 Mol-% Diaminodicyclohexylmethan
e)    0— 50 Mol-% Bisaminomethyltricyclodecan

wobei stets sowohl die Summe aus den Dicarbonsäurekomponenten a) + b) + c) als auch die Summe aus den Diaminkomponenten d) + e) jeweils 100 Mol-% betragen muß.

2. Verfahren nach Anspruch 1, dadurch gekennzeichnet, daß ein Gemisch folgender Komponenten polykondensiert wird:

a)   40—55 Mol-% Isophthalsäure
b)   45—60 Mol-% Decandicarbonsäure
d)    100 Mol-% Diamiondicyclohexylmethan.

3. Verfahren nach Anspruch 1 oder 2, dadurch gekennzeichnet, daß gegebenenfalls bis zur Hälfte der Molmenge der Isophthalsäure im jeweiligen Gemisch durch Terephthalsäure ersetzt sein kann.

**Claims for the Contracting States: BE, CH, DE, FR, GB, IT, LI, LU, NL, SE**

1. Polyamides obtained by polycondensing a mixtures of

a)   20—65 mol-% of isophthalic acid
b)   35—60 mol-% of decanedicarboxylic acid
c)    0—30 mol-% of tert. butylisophthalic acid

as well as

d)   50—100 mol-% of diaminocyclohexylmethane
e)    0— 50 mol-% of bisaminomethyltricyclodecane

wherein the sum of the dicarboxylic acid components a) + b) + c) as well as the sum of the diamine components d) + e) must amount to 100 mol-% respectively.

2. Polyamides according to claim 1, obtained by the polycondensation of a mixture of

a) 40—55 mol-% of isophthalic acid
b) 45—60 mol-% of decanedicarboxylic acid
d) 100 mol-% of diaminodicyclohexylmethane.

3. Polyamides according to claim 1 or 2, characterised in that, if necessary, up to half the molar amount of the isophthalic acid can be replaced by terephthalic acid in the particular polyamide.

## Claims for the Contracting State: AT

1. Process for the production of polyamides, characterised in that there is polycondensed a mixture of the following components:

a) 20—65 mol-% of isophthalic acid
b) 35—60 mol-% of decanedicarboxylic acid
c) 0—30 mol-% of tert. butylisophthalic acid

as well as

d) 50—100 mol-% of diaminocyclohexylmethane
e) 0— 50 mol-% of bisaminomethyltricyclodecane

wherein the sum of the dicarboxylic acid components a) + b) + c) as well as the sum of the diamine components d) + e) must amount to 100 mol-% respectively.

2. Process according to claim 1, characterised in that there is polycondensed a mixture of the following components:

a) 40—55 mol-% of isophthalic acid
b) 45—60 mol-% of decanedicarboxylic acid
d) 100 mol-% of diaminodicyclohexylmethane.

3. Process according to claim 1 or 2, characterised in that optionally up to half the molar quantity of the isophthalic acid in said mixture can be replaced by terephthalic acid.

## Revendications pour les Etats contractants: BE, CH, DE, FR, GB, IT, LI, LU, NL, SE

1. Polyamides obtenu par polycondensations d'un mélange de:

a) 20 à 65% molaire d'acide isophtalique
b) 35 à 60% molaire d'acide décanedicarboxylique
c) 0 à 30% molaire d'acide tert.butylisophtalique

ainsi que de

d) 50 à 100% molaire de diaminodicyclohexylméthane
e) 0 à 50% molaire de bis-aminométhyltricyclodécane

la somme des constituants acides dicarboxyliques a) + b) + c) ainsi que la somme des constituants diamines d) + e) devant, dans chaque cas, représenter toujours 100% molaire.

2. Polyamides selon la revendication 1, obtenu par polycondensation d'un mélange de

a) 40 à 55% molaire d'acide isophtalique
b) 45 à 60% molaire d'acide décanedicarboxylique
d) 100% molaire de diaminodicyclohexylméthane.

3. Polyamides selon la revendication 1 ou 2, caractérisé en ce qu'éventuellement jusqu'à la moitié de la quantité molaire d'acide isophtalique dans le polyamide concerné peut être remplacée par de l'acide téréphtalique.

**Revendications pour l'Etat contractant: AT**

1. Procédé de préparation de polyamides, caractérisé en ce qu'on polycondense un mélange des composants suivants:

a)  20—64% molaire d'acide isophtalique
b)  35—60% molaire d'acide décanedicarboxylique
c)   0—30% molaire d'acide tert-butylisophtalique

ainsi que

d)  50—100% molaire de diaminodicyclohexylméthane
e)   0— 50% molaire de bisaminométhyltricyclodécane

où tant la somme des composants acide dicarboxylique a) + b) + c) que la somme des composants diamine d) + e) doit toujours être égale à 100% molaire.

2. Procédé selon la revendication 1, caractérisé en ce qu'on polycondense un mélange des composants suivants:

a)  40—55% molaire d'acide isophtalique
b)  45—60% molaire d'acide décanedicarboxylique
d)   100% molaire de diaminodicyclohexylméthane.

3. Procédé selon la revendication 1 ou 2, caractérisé en ce qu'on peut éventuellement remplacer jusqu'à la moitié de la quantité molaire de l'acide isophtalique, dans chacun des mélanges, par de l'acide téréphtalique.

13